# EUROPEAN PATENT SPECIFICATION

(11) **EP 1 660 299 B1**
(45) Date of publication and mention of the grant of the patent: **23.06.2010**
(21) Application number: 04775315.7
(22) Date of filing: 18.08.2004
(51) Int. Cl.: B29C 47/16

(54) **EXTRUSION DIE WITH INTERNAL DECKLE SYSTEM**
EXTRUSIONSDÜSE MIT INTERNEM RANDBEGRENZUNGSSYSTEM
FILIÈRE D'EXTRUSION AVEC SYSTEME A ETRANGLEMENT INTERIEUR

(30) Priority: 18.08.2003 SE 0302234; 20.08.2003 US 481263 P
(43) Date of publication of application: 31.05.2006
(73) Proprietor: Flextrus Group AB, 221 00 Lund (SE)
(72) Inventor: FRIBERG, Ola, S-247 35 Sodra Sandby (SE)
(74) Representative: Danfelter, Maria
(86) International application number: PCT/SE2004/001206
(87) International publication number: WO 2005/016628

(56) References cited:
- US-A- 2 982 995
- US-A- 4 659 302
- US-A- 5 505 609
- US-A- 5 679 387
- DATABASE WPI Week 200010, Derwent Publications Ltd., London, GB; Class A32, AN 2000-109306, XP002997327 & JP 11 333 906 A (SUMITOMO HEAVY IND LTD) 07 December 1999
- DATABASE WPI Week 199230, Derwent Publications Ltd., London, GB; Class A32, AN 1992-247220, XP002997328 & JP 4 168 025 A (JOHOKU SEIKOSHO KK) 16 June 1992

## Description

### Technical field of the invention

The present invention refers to an extrusion die having an improved internal deckle system, and more particular to an extrusion die having an internal deckle system comprising upper and lower inner deckle members, and an inner deckle rod having a front end which has a pointed shape and is chamfered.

### Background of the invention

Extrusion apparatuses for extruding thermoplastic materials are commonly known. The extrusion apparatuses may have internal and/or external deckle systems in order to define and control the width of the resulting web.

However, several of the existing extrusion apparatuses, irrespectively whether they comprise an internal and/or external deckle system, suffer from formation of edge beads, i.e. formation of unduly thick portions of a film produced at both edges. The edge bead formation thus leads to an over-coating at the film edges, resulting in an increased film stability, but requiring the film edges to be cut away in order to provide a film having a homogeneous thickness. The formation of edge bead thus increases the amount of waste material and increases the consumption of material resulting in decreased productivity and increased production costs.

Further, a main problem with the extrusion dies of today is that they suffer from polymer leakage at the exit slot of the extrusion die, which leakage often tend to result in operation shut down causing reduced production efficiency and increased production costs.

US Pat. No. 4,659,302 to Maejima discloses a T-shaped extrusion die for extruding films of thermally flowable synthetic resin, comprising a manifold, a slot-like passage, lips, upper and lower inner deckle portions. The upper and lower deckle portions are configured to be moveable independently of each other in order to vary the edge thickness and to roughly vary the width of the resulting extruded film. The extrusion die further comprises downstream inner deckle rods, each which is provided at its tip with a tongue-shaped protrusion for precisely regulating the width of the resulting extruded film without forming edge beads at both edges thereof. The extrusion die further comprises a drain hole provided for removal of resin that leaks behind the upper and lower deckle portions despite the snug fit with the flow passage. US Pat. No. 2,982,995 to Groleau also discloses an extrusion die with a downstream inner deckle rod. The rod is rotated for regulating the amount of material passing through the die and acts as a throttle to reduce the amount of material issuing from the die.

A drawback with the separately moveable lower inner deckle portion disclosed by US Pat. No. 4,659,302 is it's sensitivity to deflection during adjustment, with bending of the support rod typically necessitating operation shut down. Additionally, bending may also result from flow pressure on the end face of the lower deckle portion or from the pressure of leaking resin on the support rod.

Another drawback is that the inner deckle rod is sensitive to deflection, and bending of the inner deckle rod may break the width-controlling seal provided by the inner deckle rods with resulting resin leakage through the exit slot. Further, bending of the deckle rod reduces also the life of the deckle rod requiring the deckle rod to be more often exchanged for a new rod which also increases the production costs.

Yet another drawback is the tendency of stagnation and build up of resin that leaks behind the upper and lower deckle portions, with residual resin build up on or near the support rod of the upper or lower deckle portions or the deckle rod hindering rod movement.

Solutions to these and other disadvantages of the extrusion die of US Pat. No. 4,659,302 to Maejima are proposed in U.S. Pat. No. 5,505,609 and U.S. Pat. No. 5,679,387 to Cloeren et al., which disclose an extrusion apparatus having an improved internal deckle system.

In order to overcome the deflection sensitivity and bending associated with the support rod for the independently adjustable, lower deckle portion of US Pat. No. 4,659,302 to Maejima, to reduce the available volumetric area in which polymer stagnation and build up may occur and to reduce the deckle rod deflection, U.S. Pat. No. 5,505,609 and U.S. Pat. No. 5,679,387 discloses an extrusion apparatus including an internal deckle system formed, in a downstream order, by a deckle blade and a deckle rod that extend into the preland channel of the main body included in the extrusion apparatus.

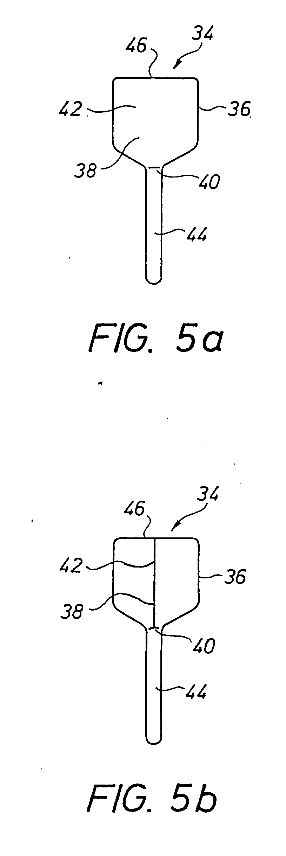

Further, U.S. Pat. No. 5,505,609 and U.S. Pat. No. 5,679,387 teach that the modified, upper deckle portion of FIG 5 or 6 in U.S. Pat. No. 5,505,609 and U.S. Pat. No. 5,679,387 could be used together with the separately adjustable, lower deckle plug and support rod taught by US Pat. No. 4,659,302 to Maejima in order to reduce deflection of the lower deckle plug and support rod otherwise caused by the flow pressure of leaking resin.

Although U.S. Pat. No. 5,505,609 and U.S. Pat. No. 5,679,387 to Cloeren et al. propose solutions to overcome the drawbacks of edge bead production and leakage, the leakage problem still exist. Due to the configuration of the internal deckle system according to U.S. Pat. No. 5,505,609 and U.S. Pat. No. 5,679,387, there occur flow irregularities in the flow of polymer at the surfaces of the upper and lower deckle members and the deckle rods facing the flow passageway. These flow irregularities arise due to the internal geometry of the die, i.e. due to the geometry of the passageway, the deckle members and the deckle rod, and due to the higher pressure inside the die as compared to the atmospheric pressure outside the die causing a large pressure gradient. When for example, polymer flow through the passageway adjacent to the deckle members and the deckle rod, their flow pattern is irregularly changed, e.g. the velocity can be reduced and the direction can be changed. Further, the polymer seem to get stuck at the surfaces of the deckle members facing the passageway and then come loose again and continue to flow through the passageway. Thus, the residence time of the molecules in the passageway will vary between the molecules, which gives rise to flow variations at the exit slot causing leakage, polymer deposit and build up at the exit slot.

Thus, there is still a need to provide an extrusion system having a further improved internal deckle system that overcomes the problem with leakage at the die slot.

### Summary of the invention

It is accordingly an object of the present invention to provide an extrusion die having an improved internal deckle structure that eliminates or almost eliminates leakage.

An aspect of the object of the invention is to provide an extrusion die having an internal deckle system that improves the flow characteristics of the polymer flow.

Another aspect of the object of the invention is to provide an extrusion die having an internal deckle system that reduces the polymer flow variation at the die slot.

Still another aspect of the object of the present invention is to reduce polymer deposit and build up at the die slot.

Another object of the present invention is to reduce the polymer leakage between the lower deckle member and the deckle rod.

Additional objects, advantages and novel features of the present invention are set forth in the description that follows, and in part will be apparent to those skilled in the art upon examination of the following description or may be learned by practice of the invention.

The foregoing object and aspects are achieved thanks to the present inventor's knowledge about the importance of allowing the polymer in the polymer flow to expand before the polymer leaves the exit slot. By allowing an expansion of the polymer, a more homogenous polymer flow and thus a more accurate polymer flow is achieved, which results in eliminated or reduced polymer deposit and build up at the exit slot.

In other words, the foregoing object and aspects are achieved by minimizing the physical influence the internal deckle structure, especially the inner deckle rod, has on the behavior of the polymer flow.

In order to fulfill the above-mentioned object and aspects among others, the present invention refers to an extrusion die having an internal deckle system. The extrusion die comprises a flow passageway extending to an exit slot. The passageway comprises, in a downstream order, a supply channel, a transverse distribution manifold and a channel portion. The internal deckle system comprises, in a downstream order, an upper deckle member, a lower deckle member and an inner deckle rod, each of which deckle members is adjustably arranged to change the width of said passageway. By providing a deckle system having separated upper and lower deckle members, the edge bead formation is minimized. Further, a front end of said deckle rod facing said passageway has a pointed shape and is chamfered, whereby transversal polymer expansion is possible.

Advantageous embodiments or modifications of the invention are set out in the dependent claims.

The drawings and detailed description of the invention show and essentially describe only preferred embodiments of the invention. As will be realized by a skilled person in the art, the invention is capable of other embodiments, and its several details are capable of modification in various respects, all without departing from the scope of the appended claims. Accordingly, the drawings and the detailed description are to be regarded as having an illustrative nature and are not intended to restrict the scope of the present invention.

### Brief description of the drawing

The present invention will be described in more detail with reference to the accompanying drawings, in which
FIG. 1 schematically shows a cross-sectional view of an embodiment of an extrusion die according to the present invention;
FIG. 2 schematically shows an enlarged cross-sectional view of an end of the embodiment according to FIG. 1;
FIG. 3 schematically shows a sectional view taken along the line I - I of FIG. 1.
FIG. 4a - 4d schematically shows enlarged cross-sectional views of embodiments of inventive inner deckle rods; and
FIG. 5a schematically shows an enlarged front view of an inner deckle rod according to any of FIG. 4a - 4d, and FIG 5b schematically shows an enlarged front view of an internal deckle rod having chamfered sides.

### Detailed description of the invention

The present invention refers to an extrusion die comprising an improved internal deckle structure which eliminates or almost eliminates polymer leakage. Advantageously, the extrusion die comprises an internal deckle system that minimizes disturbance in the laminar polymer flow, the polymer flow variation at the die slot, the polymer deposit and build up at the die slot, and that eliminates or almost eliminates the polymer leakage between a lower deckle member and an inner deckle rod. Further, the invention refers to an improved deckle system and to an improved internal deckle rod.

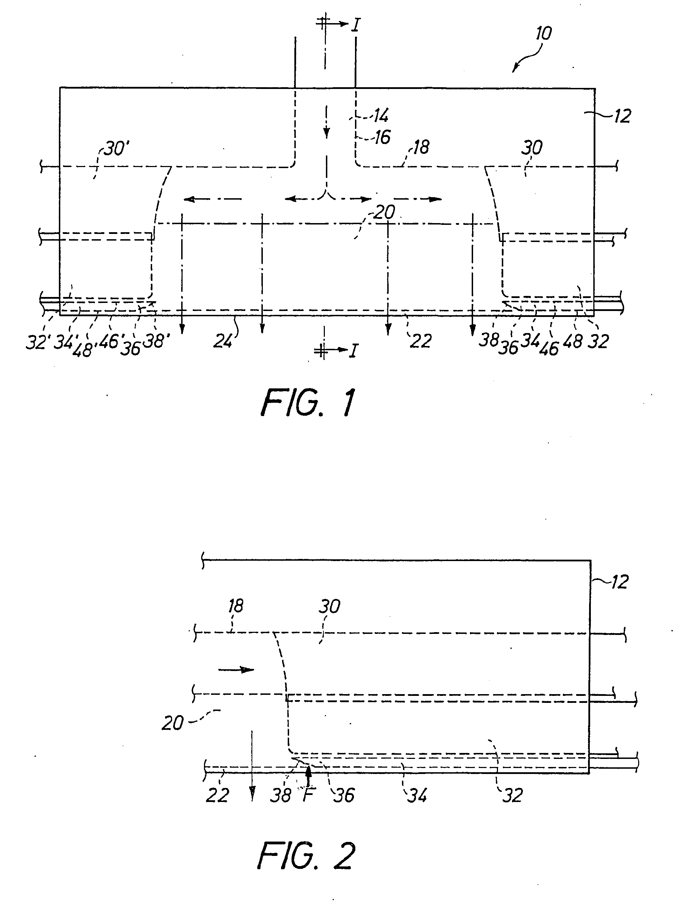

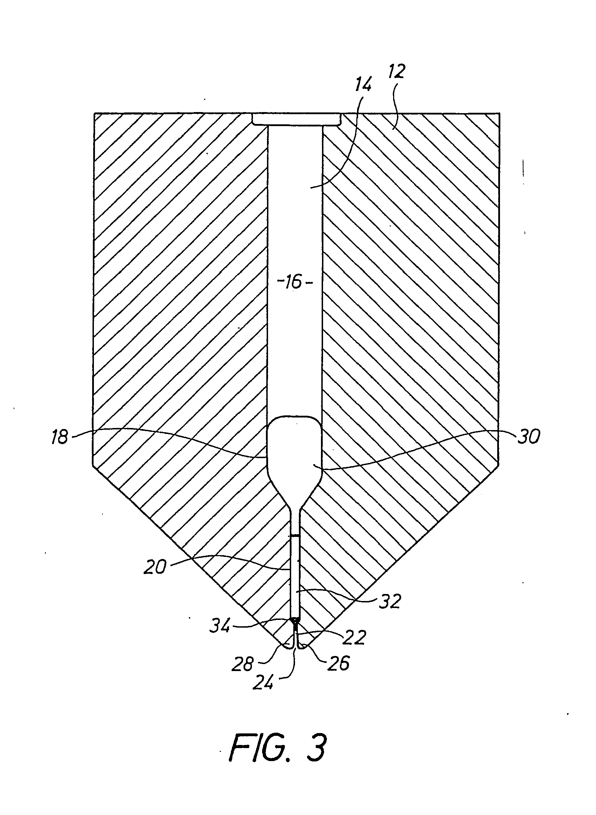

The present invention will now be described in more detail with reference to the accompanying drawings, in which the same or similar components are denoted by the same reference numerals. FIGS. 1 and 2 schematically show a cross-sectional view of an embodiment of an extrusion apparatus 10 with an internal deckle system and FIG. 3 schematically shows a sectional view taken along the line I - I of FIG. 1. The extrusion apparatus 10 comprising an extrusion die 12 having a passageway 14 providing for a polymer flow through the die 12, and a deckle system.

The die 12 and the passageway 14 can be of the type described in U.S. Pat. No. 5,505,609 and U.S. Pat. No. 5,679,387 to Cloeren et al or of another known type. The passageway 14 comprises, in a downstream order, a supply channel 16 connected to an inlet of the die 12 for polymer supply, a transverse distribution manifold 18 connected to the supply channel 16 and arranged to distribute the polymer width-wise in the die 12, a preland channel 20, a land channel 22 that terminates in an exit slot 24 formed by lips 26, 28. In FIGS. 1 and 2 the main flow direction is indicated by arrows.

The deckle system comprises in downstream order an upper deckle member 30, 30' and a lower deckle member 32, 32' extending transversely through a side plate of the die 12 into the transverse distribution manifold 18. The upper and lower deckle members can for example be of the types described in U.S. Pat. No. 5,505,609 and U.S. Pat. No. 5,679,387 to Cloeren et al. or another known type.

The upper deckle member 30 is preferably a full-width upper deckle plug 30, i.e. the transverse dimension of the upper deckle plug 30 is substantially equal to or exceeding the maximum engagement of the plug in the transverse distribution manifold 18, and the lower deckle member 32 is preferably a deckle blade 32. The upper and lower deckle members 30, 32 is further configured to be independently adjustable to changed the width of the passageway 14.

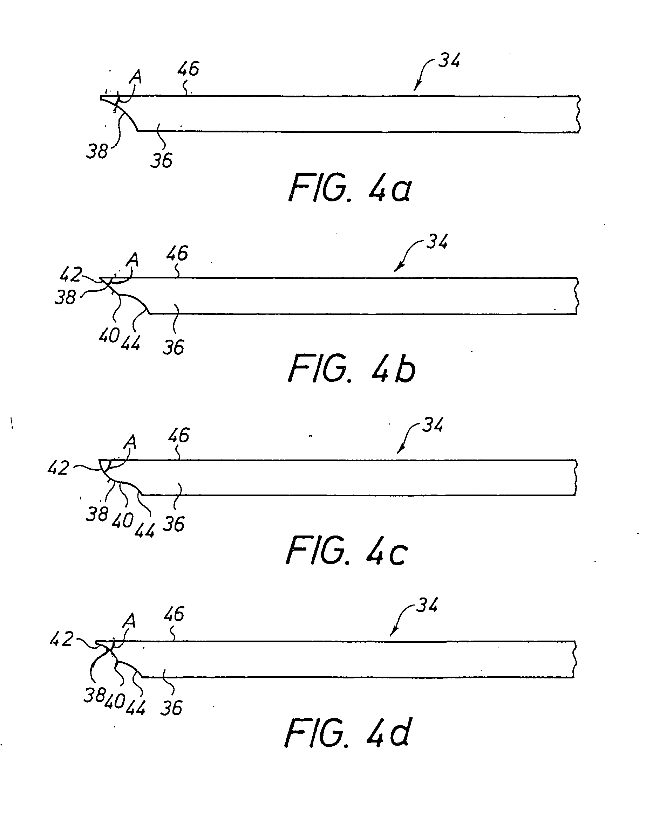

With reference to FIGS. 4a - 4d and 5a-5b, embodiments of an inventive inner deckle rod 34 will be described. According to a first embodiment, the deckle rod is provided with a pointed shape in a front end 36 thereof, which front end 36 is chamfered. The deckle rod can be provided with a downwardly directed front surface 38 facing the passageway when in use and the front surface 38 can have a concave shape.

Preferably, the front surface 38 is provided with a change of gradient 40. Upstream of the change of gradient 40, the front surface 38 has a first surface portion 42 having a first shape, and downstream of which change of gradient 40 said front surface 38 has a second surface portion 44 having a second shape. Further, at least one of the first and the second shapes is a concave shape.

According to a second and preferred embodiment, the first surface portion 42 is a plane surface and the second surface portion 44 is a concave surface and according to a third embodiment, the first surface portion 42 is a convex surface and that said second surface portion 44 is a concave surface.

In a fourth embodiment. the first surface portion 42 is a first concave surface having a first concave shape and the second surface portion 44 is a second concave surface having a second concave shape.

According to embodiments of the inventive deckle rod, the angle A (cf. FIG. 4a - 4d) between the first surface portion 42 and an upper surface 46 of the deckle rod 34 is in the range of 25 - 65 degrees, preferably in the range of 40 - 50 degrees, and more preferably about 45 degrees. The front surface 38 or the second surface portion 42 is further provided with a concave shape corresponding to the arc of a quarter of a circle having a diameter D in the range of about 2 - 12 millimeters, preferably in the range of about 4 - 5 millimeters.

Further, the embodiments of the deckle rod described above can be provided with a pointed front end having both a chamfered front end and chamfered front sides. Thus, when looking at the deckle rod from the front end, the deckle rod will look like a knife edge as schematically illustrated in Fig. 5b.

When in use, the front end 36 will face the passageway 14 and the exit slot 24 of the extrusion die 12. Further, the deckle rod 34 is positioned proximate to a transition wall (not shown) separating the preland channel 20 and the land channel 22, and receives structural support from the transition wall and the trailing edge (not shown) of the deckle blade 32 and from the die lips 26, 28. Note that the space separating the deckle blade 32 and the deckle rod 34 in FIGS. 1 and 2, is only for clarity. In fact, the deckle rod 34 is closely adjacent to the trailing edge of deckle blade 32. However, clearance is provided in order to avoid frictional contact during adjustment of either part.

By means of a deckle rod provided with a pointed shape in a chamfered front end thereof, the present invention provides an improved internal deckle system that overcomes the leakage problems still occurring in the existing extrusion dies. Due to the special configuration of the front end of the inventive deckle rod, a larger area for transverse polymer expansion is provided adjacent to the exit slot of the extrusion die. The present inventor has realized that by allowing transverse polymer expansion adjacent to the exit slot, a more homogenous polymer flow, i.e. a more accurate polymer flow, is achieved, resulting in eliminated or reduced leakage, polymer deposit and build up at the exit slot. The degree of polymer expansion or die swell is dependent on the width of the extruded film, i.e. dependent on the transverse width of the passageway, the type of polymer, the pressure difference between the pressure inside the die and the atmospheric pressure, and dependent on the draw-down ratio, i.e. on the velocity by which the film is drawn out from the extrusion apparatus. Further, the pressure in the die increases with decreasing transverse width of the passageway and the required chamfering of the front end of the deckle rod increases with increasing pressure in the die.

Another advantage with the inventive deckle rod is that its pointed shape of the front end thereof facilitates movements of the deckle rod towards the passageway, since the deckle rod like an arrow displaces the polymer existing in the passageway. Thus, the position of the deckle rod can be adjusted with exertion of less force.

A further advantage with the inventive deckle rod is that its configuration provides for an improved sealing between the lower deckle blade and the deckle rod, whereby no or a reduced amount of polymer may flow into the area between the lower deckle member and the deckle rod and thereby reducing or eliminating polymer leakage from that area. Due to the pointed shape of the front end of the deckle rod, the deckle rod is somewhat flexible. Thus, an improved sealing effect is accomplished when the deckle rod is pressed against the lower deckle member due to the upwardly directed force that the polymer molecules in the polymer flow exert on the front surface of the deckle rod, which force F schematically is illustrated in FIG. 2. Thus, the flow of polymer into the space between the lower deckle member and the deckle rod is eliminated and the leakage of polymer is reduced.

Yet another advantage with the inventive deckle rod is that it provides for a cleaning effect during adjustment of the deckle rod, i.e. by adjusting the position of the deckle rod the point of the deckle will scrape burned polymer parts out from the passageway.

Furthermore, due to the so called draw-down of the extruded film, i.e. that the film is drawn out from the extrusion apparatus and winded up on e.g. a cylinder, the polymer at the die slot and in the area below the chamfered surface of the deckle rod will be effectively withdrawn from the die. Thus there will not be any polymer deposit and build-up of polymer in the area of the die below the chamfered deckle rod, which polymer deposit otherwise would give rise to flow irregularities and leakage at the die slot.

Due to the draw-down the thickness of the film will also be reduced. For example, if the distance between the die lips is about 500 micrometers this would approximately correspond to the extruded film thickness if no draw-down prevailed. However, due to the draw-down the film thickness would for the same example be approximately 20 micrometers. Another effect with the draw-down is the so-called neck-in phenomenon, meaning that the extruded film width also is reduced as compared to the width of the passageway.

### Tests

Tests have been made in order to verify the present invention. In a first test case a conventional extrusion apparatus with a die having an internal deckle system comprising a blunt shaped deckle rod was used. In a second test case, the same extrusion apparatus and die were used, except for the fact that the blunt-shaped deckle rod was exchanged for the second embodiment of the pointed deckle rod according to the present invention (cf. FIG. 4b). In the test cases, the same operation conditions prevailed, i.e. the polymer was a polyethylene copolymer or an ionomer, the pressure was in the range of 100-300 bar, usually about 200 bar, the film width was about 1500 mm and the film thickness was in the range of 12 - 50 g/m2 (density of approximately 0,9 g/cm3).

During a time period of 9 weeks, approximately 80 operation shut downs were necessitated due to leakage when using a conventional, blunt shaped deckle rod. When using the inventive pointed deckle rod during the same number of weeks, no operation shut downs were necessitated due to leakage.

Although, the invention has been described with reference to a polymeric material it shall be understood that the invention is applicable also to a non-polymeric material. It shall further be understood that the expressions concave and convex used to describe the first and second surface portions are not intended to be delimited to refer to a surface portion having a circular shape, but the expressions also refer to a surface portion composed of one or several straight parts.

## Claims

1. An extrusion die (12) having an internal deckle system and comprising a flow passageway (14) extending to an exit slot (24), said passageway (14) comprising, in a downstream order, a supply channel (16), a transverse distribution manifold (18) and a channel portion (20, 22), said internal deckle system comprising, in a downstream order, an upper deckle member (30), a lower deckle member (32) and an inner deckle rod (34), each of which deckle members (30, 32, 34) is adjustably arranged to change the width of said passageway (14), **characterized in that** a front end (36) of said deckle rod (34) facing said passageway (14) has a pointed shape and is chamfered.

2. The extrusion die according to claim 1, **characterized in that** said front end (36) has a downwardly directed front surface (38) facing said passageway, said front surface (3 8) having a concave shape.

3. The extrusion die of claim 2, **characterized in that** said front surface (38) has a change of gradient (40) upstream of which said front surface (38) has a first surface portion (42) having a first shape, and downstream of which change of gradient (40) said front surface (38) has a second surface portion (44) having a second shape, and **in that** at least one of said first and second shapes is said concave shape.

4. The extrusion die of claim 3, **characterized in that** said first surface portion (42) is a plane surface and that said second surface portion (44) is a concave surface.

5. The extrusion die of claim 3, **characterized in that** said first surface portion (42) is a convex surface and that said second surface portion (44) is a concave surface.

6. The extrusion die of claim 3, **characterized in that** said first surface portion (42) is a first concave surface having a first concave shape and that said second surface portion (44) is a second concave surface having a second concave shape.

7. The extrusion die of claim 3, **characterized in that** said deckle rod (34) is configured to have an angle (A) between said first surface portion (42) and an upper surface (46) of said deckle rod (34) in the range of 25 - 65 degrees, preferably in the range of 40 - 50 degrees.

8. The extrusion die of any of claim 2 - 7, **characterized in that** said concave shape corresponds to the arc of a quarter of a circle having a diameter in the range of about 2 - 12 millimeters, preferably in the range of about 4 - 5 millimeters.

## Patentansprüche

1. Extrusionsform (12) mit einem internen Begrenzungssystem, umfassend einen Fließdurchgang (14), der sich zu einem Ausgangsschlitz (24) erstreckt, wobei der Durchgang (14) zur Auslaufseite hin einen Einspeisungskanal (16), einen querverlaufenden Verteilerdüsenkanal (18) und einen Kanalabschnitt (20, 22) umfasst, und das interne Begrenzungssystem zur Auslaufseite hin ein oberes Begrenzungselement (30), ein unteres Begrenzungselement (32) und einen inneren Begrenzungsstab (34) umfasst, wobei jedes Begrenzungselement (30, 32, 34) zur Änderung der Breite des Durchganges (14) verstellbar angeordnet ist, **dadurch gekennzeichnet, dass** ein Vorderende (36) des Begrenzungsstabes (34), der dem Durchgang (14) gegenüberliegt, eine spitze Form aufweist und abgeschrägt ist.

2. Extrusionsform gemäß Anspruch 1, **dadurch gekennzeichnet, dass** das Vorderende (36) eine abwärts gerichtete Vorderoberfläche (38) besitzt, die dem Durchgang gegenüberliegt, wobei die Vorderoberfläche (38) eine konkave Form besitzt.

3. Extrusionsform nach Anspruch 2, **dadurch gekennzeichnet, dass** die Vorderoberfläche (38) eine Gradientenänderung (40) aufweist, wovon stromaufwärts die Vorderoberfläche (38) einen ersten Oberflächenabschnitt (42) mit einer ersten Form besitzt und stromabwärts von der Gradientenänderung (40) die Vorderoberfläche (38) einen zweiten Oberflächenabschnitt (44) mit einer zweiten Form besitzt und **dadurch**, dass wenigstens eine dieser ersten und zweiten Formen die konkave Form ist.

4. Extrusionsform nach Anspruch 3, **dadurch gekennzeichnet, dass** der erste Oberflächenabschnitt (42) eine plane Oberfläche ist und dass der zweite Oberflächenabschnitt (44) eine konkave Oberfläche ist.

5. Extrusionsform nach Anspruch 3, **dadurch gekennzeichnet, dass** der erste Oberflächenabschnitt (42) eine konvexe Oberfläche ist und dass der zweite Oberflächenabschnitt (44) eine konkave Oberfläche ist.

6. Extrusionsform nach Anspruch 3, **dadurch gekennzeichnet, dass** der erste Oberflächenabschnitt (42) eine erste konkave Oberfläche mit einer ersten konkaven Form ist und dass der zweite Oberflächenabschnitt (44) eine zweite konkave Oberfläche mit einer zweiten konkaven Form ist.

7. Extrusionsform nach Anspruch 3, **dadurch gekennzeichnet, dass** der Begrenzungsstab (34) derart ausgestaltet ist, dass er zwischen dem ersten Oberflächenabschnitt (42) und einer oberen Fläche (46) des Begrenzungsstabes (34) einen Winkel (A) im Bereich von 25° bis 65°, vorzugsweise im Bereich von 40° bis 50° aufweist.

8. Extrusionsform nach einem der Ansprüche 2 bis 7, **dadurch gekennzeichnet, dass** die konkave Form dem Bogen eines Viertels eines Kreises mit einem Durchmesser im Bereich von etwa 2 bis 12 mm, vorzugsweise im Bereich von etwa 4 bis 5 mm entspricht.

## Revendications

1. Filière d'extrusion (12) comportant un système de tiroir intérieur et comprenant un passage d'écoulement (14) s'étendant vers une fente de sortie (24), ledit passage (14) comprenant, dans un ordre aval, un canal d'alimentation (16), un manifold de distribution transversal (18) et une partie de canal (20, 22), ledit système de tiroir intérieur comprenant, dans un ordre aval, un élément de tiroir supérieur (30), un élément de tiroir inférieur (32) et une tige de tiroir intérieure (34), chacun de ces éléments de tiroir (30, 32, 34) étant configuré de façon réglable afin de changer la largeur dudit passage (14), **caractérisée en ce qu'**une extrémité avant (36) de ladite tige de tiroir (34) dirigée vers ledit passage (14) a une forme pointue et est chanfreinée.

2. Filière d'extrusion selon la revendication 1,
**caractérisée en ce que** ladite extrémité avant (36) comporte une surface avant dirigée vers le bas (38) dirigée vers ledit passage, ladite surface avant (38) ayant une forme concave.

3. Filière d'extrusion selon la revendication 2,
**caractérisée en ce que** ladite surface avant (38) présente un changement de gradient (40) en amont duquel ladite surface avant (38) comporte une première partie de surface (42) ayant une première forme, et en aval duquel changement de gradient (40) ladite surface avant (38) comporte une deuxième partie de surface (44) ayant une deuxième forme, et **en ce qu'**au moins l'une desdites première et deuxième formes est ladite forme concave.

4. Filière d'extrusion selon la revendication 3,
**caractérisée en ce que** ladite première partie de surface (42) est une surface plane, et **en ce que** ladite deuxième partie de surface (44) est une surface concave.

5. Filière d'extrusion selon la revendication 3,
**caractérisée en ce que** ladite première partie de surface (42) est une surface convexe, et **en ce que** ladite deuxième partie de surface (44) est une surface concave.

6. Filière d'extrusion selon la revendication 3,
**caractérisée en ce que** ladite première partie de surface (42) est une première surface concave ayant une première forme concave, et **en ce que** ladite deuxième partie de surface (44) est une deuxième surface concave ayant une deuxième forme concave.

7. Filière d'extrusion selon la revendication 3,
**caractérisée en ce que** ladite tige de tiroir (34) est configurée de façon à avoir un angle (A) entre ladite première partie de surface (42) et une surface supérieure (46) de ladite tige de tiroir (34) qui est situé dans la plage comprise entre 25 et 65 degrés, et, de préférence, dans la plage comprise entre 40 et 50 degrés.

8. Filière d'extrusion selon l'une quelconque des revendications 2 à 7, **caractérisée en ce que** ladite forme concave correspond à l'arc d'un quart d'un cercle ayant un diamètre situé dans la plage comprise entre environ 2 et 12 millimètres, et, de préférence, dans la plage comprise entre environ 4 et 5 millimètres.
